# EUROPÄISCHE PATENTSCHRIFT

(11) **EP 0 847 896 B1**
(45) Veröffentlichungstag und Bekanntmachung des Hinweises auf die Patenterteilung: **26.03.2003**
(21) Anmeldenummer: 97121617.1
(22) Anmeldetag: 09.12.1997
(51) Int. Cl.: B60Q 3/02

(54) **Leseleuchte**
Reading light
Lampe de lecture

(30) Priorität: 14.12.1996 DE 19652095
(43) Veröffentlichungstag der Anmeldung: 17.06.1998
(73) Patentinhaber: Hella KG Hueck & Co., 59552 Lippstadt (DE)
(72) Erfinder: Decker, Detlef, 59558 Lippstadt (DE); Merkelbach, Frank Dr., 59597 Erwitte (DE); Ruths, Torsten, 67585 Dorn-Dürkheim (DE)

(56) Entgegenhaltungen:
- EP-A- 0 515 921
- EP-A- 0 633 424
- DE-A- 19 610 138
- DETLEF DECKER: "CELIS- Ein Konzept für die Pkw-Innenraumbeleuchtung mit Lichtleittechnik" ATZ AUTOMOBILTECHNISCHE ZEITSCHRIFT, Bd. 97, Nr. 7/8, Juli 1995 - August 1995, Seiten 480-483, XP000521276 STUTTGART

## Beschreibung

Die Erfindung betrifft eine Leseleuchte nach dem Oberbegriff des Patentanspruchs 1.

Zur Beleuchtung eines Innenraumes eines Fahrzeuges sind zahlreiche Leuchten, die als Leseleuchten bevorzugt in dem Fahrzeughimmel, d. h. in die Decke des Fahrzeuginnenraumes eingebaut werden, bekannt. Die bekannten Leseleuchten für Fahrzeuginnenräume weisen eine Glühlampe auf, die hinter einer Lichtscheibe montiert ist. Eine Integration dieser bekannten Leseleuchten in einen modernen, besonders flachen, aus Schaumstoff oder ähnlichem Material bestehenden Dachhimmel, der direkt auf die Karosserie aufgeklebt wird, ist praktisch nicht möglich, da bei den bekannten Leseleuchten bei entsprechender Verringerung ihrer Bautiefe durch die Glühlampe verursachte thermische Probleme auftreten, die sich auch nicht durch die Wahl von besonders hitzebeständigen Werkstoffen lösen lassen, da dies zu einer unzulässigen Erwärmung des umliegenden Dachhimmels führen würde.

Weiterhin ist aus der DE 43 25 115 A1 eine Beleuchtungseinrichtung zur Ausleuchtung einer planen Nutzfläche, die - von der Bautiefe abgesehen - als Leseleuchte verwendet werden könnte, bekannt. Bei dieser Beleuchtungseinrichtung wird Licht über einen Lichtleiter, z. B. einen Lichtleitstab oder einen Bündel von Lichtleitfasern, einem Umlenkelement zugeführt, um beispielsweise 90 Grad umgelenkt und auf die zu beleuchtende Fläche projiziert zu werden. Weiterhin ist aus der EP 0 633 424 A1, die den Oberbegriff des Anspruchs 1 zeigt, eine Anordnung von Lichtquelle, Faseroptik und verstellbarem Lichtkegel bekannt. Obwohl bei den bekannten Leuchten unter Verwendung von Lichtleitern praktisch keine thermischen Probleme auftreten, werden solche Leuchten wegen ihrer relativ großen Bautiefe bisher nicht zum Einbau in einen flachen Fahrzeughimmel eines Fahrzeuginnenraumes verwendet. Aus der EP 0 633 424 A1 ist zwar ein Umlenkelement als Kappe ausgebildet. Die Kappe dient aber nur zur Weiterleitung des aus dem Lichtleiter austretenden Lichtbündels zu einem Tragkörper, in dem eine weitere Umlenkung des Lichtbündels erfolgt. Das freie Ende des Lichtleiters ist seitlich in die Kappe und damit quer zu derselben eingeführt.

Aufgabe der vorliegenden Erfindung ist es daher, eine Leseleuchte geringer Bautiefe zu schaffen, die insbesondere zum Einbau in einen flachen Fahrzeughimmel geeignet ist.

Die Aufgabe wird erfindungsgemäß durch die Merkmale des Patentanspruchs 1 gelöst.

Durch die Ausbildung des Umlenkelementes als Kappe kann auf ein spezielles Gehäuse für das Umlenkelement verzichtet werden, so dass die Einbautiefe besonders gering gehalten werden kann. Die Linse kann vorteilhaft so in einer seitlichen Öffnung der Mantelfläche der Kappe angeordnet sein, dass sie die Einbautiefe der Leseleuchte praktisch nicht erhöht.

Nach einer bevorzugten Ausführungsform der Erfindung wird die Reflexionsfläche von einer verspiegelten Fläche der Kappe gebildet, die beispielsweise gegenüber der optischen Achse des Lichtleiters um einen Winkel von 45 Grad geneigt ist, wobei das von dem Lichtleiter ausgehende Lichtbündel um 90 Grad abgelenkt wird. Die Linse ist als Fresnellinse ausgebildet, deren optische Achse mit der gespiegelten optischen Achse des Lichtleiters zusammenfällt. Entsprechend dem Einbauort der Leseleuchte und der auszuleuchtenden Fläche wird der Neigungswinkel der Reflexionsflche gewählt. Durch die Verwendung einer Fresnellinse wird eine besonders günstige und gleichmäßige Streuung erzielt.

Nach einer weiteren bevorzugten Ausführungsform weist das freie Ende des Lichtleiters ein massives Lichtleitelement auf. Durch ein massives Lichtleitelement wird eine homogenere Ausleuchtung erreicht. Das Lichtleitelement kann als faserfreier Stab ausgebildet sein.

Gemäß einer weiteren bevorzugten Ausführungsform ist das massive Lichtleitelement als ein Querschnittswandler ausgebildet, dessen dem Faserbündel des Lichtleiters zugewandtes erstes Ende im Querschnitt an das Faserbündel angepaßt ist und dessen dem ersten Ende abgewandtes zweites Ende einen an die Form der auszuleuchtenden Fläche angepaßten Querschnitt aufweist. Dadurch kann beispielsweise ein runder Querschnitt des Faserbündels in einen rechteckigen Querschnitt zur Ausleuchtung einer etwa rechteckigen Fläche gewandelt werden. Die Fresnellinse ist dann zweckmäßigerweise ebenfalls rechteckig ausgebildet. Zugleich kann damit eine noch geringere Einbautiefe erreicht werden.

Durch eine entsprechende Wahl der Fresnellinse und ihrer Brennweite kann die genannte zu beleuchtende Fläche sowohl scharfkantig als auch mit weich auslaufenden Grenzen ausgeleuchtet werden.

Da außer der Bautiefe auch die sonstigen Abmessungen dieser Leseleuchte äußerst gering sind, ist die Unterbringung des Lichtaustrittskörpers an ergonomisch optimalen Positionen des Fahrzeuginnenraumes möglich. Durch den Einsatz der Lichtleittechnik kann durch die Auffächerung eines Lichtleiterbündels auch mit mehreren Lichtaustritten gearbeitet werden, die gemeinsam die zu beleuchtende Fläche ausleuchten, so daß sich deutliche Reduzierungen der Schatten (z. B. durch die Hand beim Schreiben) und eine besonders homogene Ausleuchtung ergeben.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:
- Figur 1:: Eine Vorderansicht eines Fahrzeuginnenraumes im Ausschnitt mit einer Leseleuchte,
- Figur 2:: eine Seitenansicht einer Leseleuchte im Schnitt,
- Figur 3:: eine Draufsicht auf die Leseleuchte von Figur 2 entlang der Linie III-III geschnitten,
- Figur 4:: eine Vorderansicht der Leseleuchte von Figur 2 entlang der Linie IV-IV geschnitten,
- Figur 5:: eine schematische Darstellung des Strahlenganges im Umlenkbereich einer Leseleuchte und
- Figur 6:: eine Untersicht unter eine Leseleuchte mit als Querschnittswandler ausgebildetem Lichtleitelement.

Eine Leseleuchte (1) besteht im wesentlichen aus einem Lichtleiter (2), einem Umlenkelement (3) und einer nachgeordneten Linse (4).

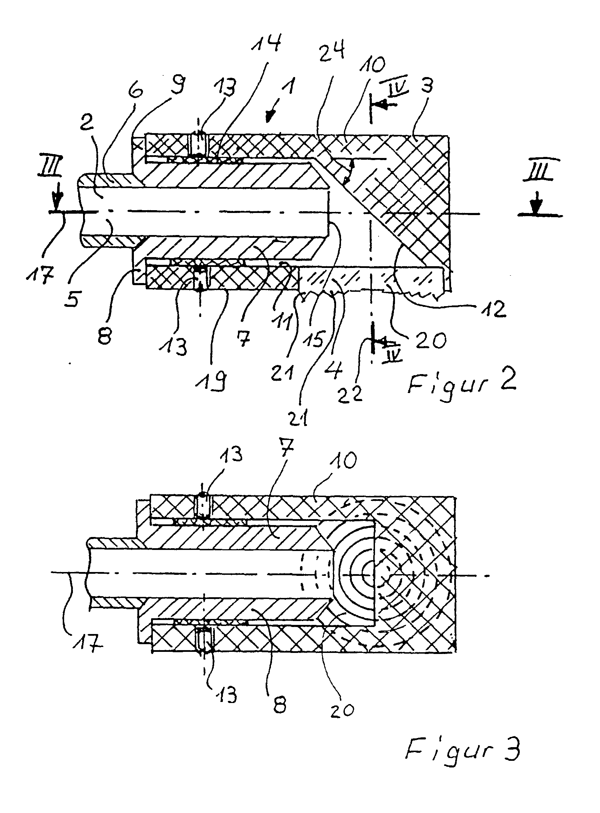

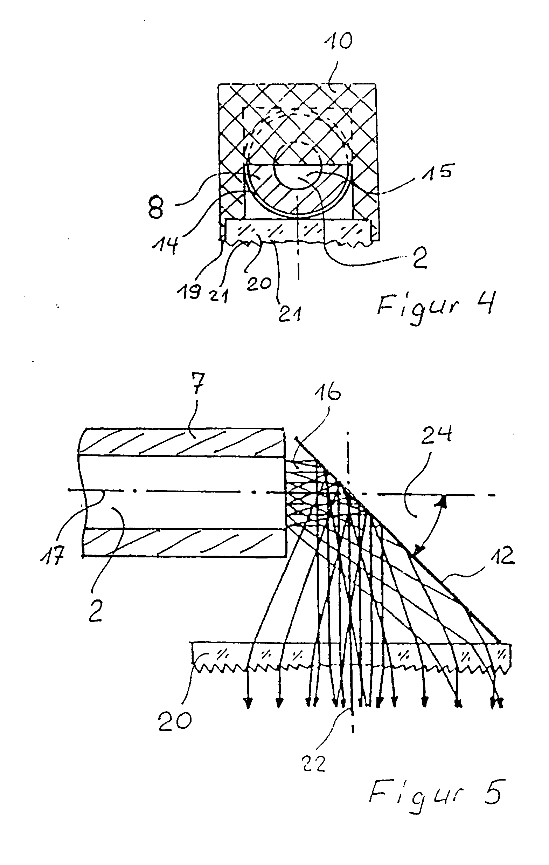

Wie in Figur 2 und Figur 3 dargestellt ist, besteht der Lichtleiter (2) aus einem Glasfaserbündel (5) zur Lichtübertragung, das von einem Schutzmantel (6) umgeben ist. An seinem dem Umlenkelement (3) zugewandten freien Ende (7) weist der Lichtleiter (2) eine Anschlaghülse (8) mit einem Anschlag (9) auf.

Das Umlenkelement (3) ist als eine Kappe (10) ausgebildet, die ein Innenprofil (11) aufweist. Das Innenprofil (11) ist an einem Ende durch eine Reflexionsfläche (12) begrenzt und an seinem der Reflexionsfläche (12) abgewandten Ende offen, so daß die Kappe (10) auf die Anschlaghülse (8) des freien Endes (7) des Lichtleiters (2) steckbar ist. Die Kappe (10) ist mit Gewindestiften (13) an der Anschlaghülse (8) festklemmbar. Zu einer günstigeren Klemmung kann zwischen Anschlaghülse (8) und Kappe (10) ein elastischer Ring (14) angeordnet werden. Die Reflexionsfläche (12) wird von einer verspiegelten Fläche der Kappe (10) gebildet. Es ist aber grundsätzlich auch möglich, in die Kappe (10) einen Spiegel einzusetzen. Für eine Umlenkung von 90 Grad des an der Lichtaustrittsfläche (15) des Lichtleiters (2) austretenden Lichtbündels (16) ist die Reflexionsfläche (12) um einen Neigungswinkel (24) von 45 Grad gegenüber der optischen Achse (17) des Lichtleiters (2) geneigt. Bei einer von 90 Grad abweichenden Umlenkung wird die Reflexionsfläche (12) entsprechend weniger oder mehr geneigt.

In einer seitlichen Öffnung, die an der dem Innenraum (18) eines Fahrzeuges zugewandten Unterseite (19) der Kappe (10) angeordnet ist, ist die als eine Fresnellinse (20) ausgebildete Linse (4) befestigt. Die Fresnellinse (20) weist dem Innenraum (18) zugewandte Außenprismen (21) auf. Die Linse (4) bzw. die Fresnellinse (20) ist so eingesetzt, daß die optische Achse (22) der Linse (4) mit der an der Reflexionsfläche (12) gespiegelten optischen Achse (17) des Lichtleiters (2) zusammenfällt.

Nach einem erfindungsgemäßen Beispiel weist das Glasfaserbündel (5) einen Durchmesser von 4 mm und die Anschlaghülse (8) einen Durchmesser von 8 mm auf. Die Kappe (10) weist einen quadratischen Querschnitt von 13 x 13 mm auf. Die Länge der Kappe (10) beträgt 25 mm. Die Reflexionsfläche (12) ist gegenüber der optischen Achse (17) des Lichtleiters (2) um 45 Grad geneigt. Das Innenprofil (11) weist eine lichte Weite von 9 x 9 mm auf. Der Durchmesser der Fresnellinse (20) beträgt 12 mm. Die Brennweite der Fresnellinse (20) beträgt 10 mm. Die Dicke der Fresnellinse beträgt 2 mm. Die genannten Abmessungen sind nur beispielhaft und können in Abhängigkeit von den Randbedingungen, wie Einbautiefe, Ort der Plazierung der Leuchte, auszuleuchtende Fläche etc. verändert werden. Insbesondere durch die Wahl der Fresnellinse (20) und ihrer Brennweite kann die zu beleuchtende Fläche sowohl scharfkantig als auch mit weich auslaufenden Grenzen ausgeleuchtet werden.

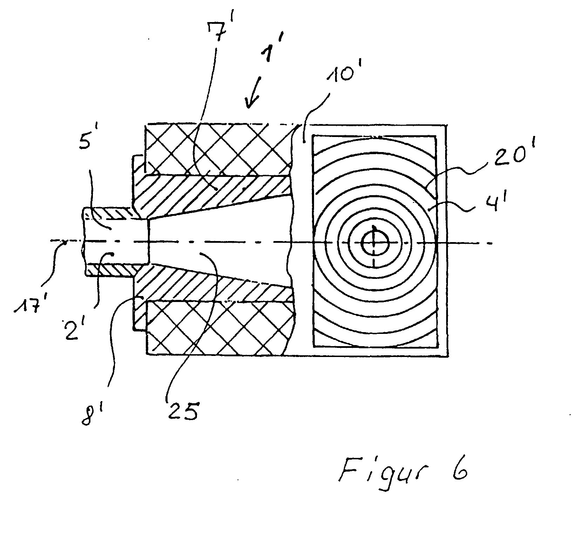

Nach einem weiteren Ausführungsbeispiel gemäß Figur 6 ist es auch möglich, am freien Ende (7') des Lichtleiters (2') ein starres bzw. massives Lichtleitelement (25) vorzusehen. Dieses massiv ausgebildete Lichtleitelement (25) trägt zu einer Homogenisierung des Lichtbündels (16) bei. Das massive Lichtleitelement (25) kann aber auch als Querschnittswandler ausgebildet sein. Damit kann der runde Durchmesser des Glasfaserbündels (5') in einen an die Form der auszuleuchtenden Fläche, beispielsweise einem rechteckigen Querschnitt, angepaßt werden, so daß nach der Projektion ebenfalls ein rechteckiges Feld ausgeleuchtet wird. Die Fresnellinse (20') ist dabei ebenfalls rechteckig ausgebildet.

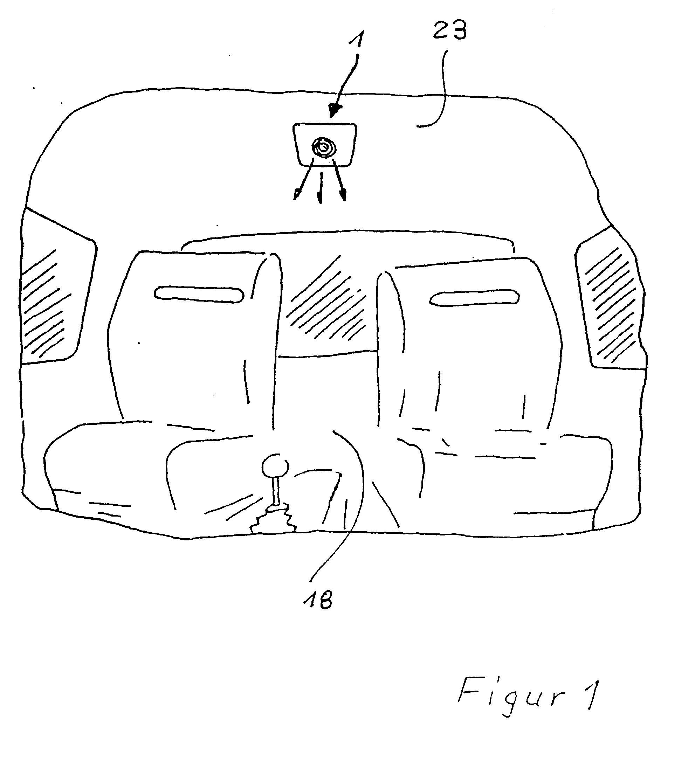

Die Leseleuchte (1,1') ist, wie aus Figur 1 zu ersehen ist, in einem Fahrzeughimmel (23) des Fahrzeuginnenraumes (18) eingebaut.

Licht aus einer nicht dargestellten Lichtquelle wird in den Lichtleiter (2,2') eingespiegelt und von dem Glasfaserbündel (5,5') zum freien Ende (7,7') des Lichtleiters (2,2') geleitet. An der Lichtaustrittsfläche (15) des Lichtleiters (2,2') tritt das Licht als Lichtbündel (16) aus und wird von der Reflexionsfläche (12) umgelenkt und von der Fresnellinse (20,20') in den Innenraum (18) projiziert.

## Patentansprüche

1. Leseleuchte, insbesondere zum Einbau in einen Fahrzeughimmel, mit einem Lichtleiter (2; 2'), mit einem als Kappe (10; 10') ausgebildeten Umlenkelement (3), mit einer Reflexionsfläche (12) und mit einer nachgeordneten Linse (4; 4'), die in einer seitlichen Öffnung der Kappe (10, 10') angeordnet ist wobei die Kappe (10;10') mit ihrem der Reflexionsfläche (12) gegenüberliegenden Ende über ein freies Ende (7; 7') des Lichtleiters (2; 2') gesteckt ist und ein Innenprofil (11) aufweist, das an einem Ende durch die Reflexionsfläche (12) begrenzt ist, **dadurch gekennzeichnet, dass** die Kappe (10;10') axial auf den Lichtleiter (2; 2') aufgesteckt ist.

2. Leseleuchte nach Anspruch 1, **dadurch gekennzeichnet, daß** die Reflexionsfläche (12) von einer verspiegelten Fläche der Kappe (10,10') gebildet wird.

3. Leseleuchte nach Anspruch 1, **dadurch gekennzeichnet, daß** die Reflexionsfläche (12) von einem an einer Innenfläche der Kappe (10,10') angeordneten Spiegel gebildet wird.

4. Leseleuchte nach einem der Ansprüche 1 bis 3, **dadurch gekennzeichnet, daß** die optische Achse (22) der Linse (4,4') mit der an der Reflexionsfläche (12) gespiegelten optischen Achse (17,17') des Lichtleiters (2,2') zusammenfällt.

5. Leseleuchte nach einem der Ansprüche 1 bis 4, **dadurch gekennzeichnet, daß** die Linse (4,4') als Fresnellinse (20,20') ausgebildet ist.

6. Leseleuchte nach einem der Ansprüche 1 bis 5, **dadurch gekennzeichnet, daß** das freie Ende (7,7') des Lichtleiters (2,2') eine Anschlaghülse (8,8') aufweist, über die die Kappe (10,10') gesteckt und befestigt ist.

7. Leseleuchte nach einem der Ansprüche 1 bis 6, **dadurch gekennzeichnet, daß** das freie Ende (7) des Lichtleiters (2) von einem Faserbündel (5) des Lichtleiters (2) gebildet wird.

8. Leseleuchte nach einem der Ansprüche 1 bis 6, **dadurch gekennzeichnet, daß** das freie Ende (7') des Lichtleiters (2') ein massives Lichtleitelement (25) aufweist.

9. Leseleuchte nach Anspruch 8, **dadurch gekennzeichnet, daß** das Lichtleitelement (25) als ein Querschnittswandler ausgebildet ist, dessen dem Faserbündel (5') des Lichtleiters (2') zugewandtes erstes Ende im Querschnitt an das Faserbündel (5') angepaßt ist und dessen dem ersten Ende abgewandtes zweites Ende einen an die Form der auszuleuchtenden Fläche angepaßten Querschnitt aufweist.

10. Leseleuchte nach Anspruch 9, **dadurch gekennzeichnet, daß** das zweite Ende des Querschnittswandlers eine rechteckige Form aufweist.

## Claims

1. Reading lamp, in particular for installation in a vehicle headliner, comprising a light guide (2; 2'), a deflecting element (3) constructed in the form of a cap (10; 10') , a reflective surface (12) and a downstream lens (4; 4') which is arranged in an opening in the side of the cap (10; 10'), the end of the cap (10; 10') that is situated opposite the reflective surface (12) being push-fitted via a free end (7; 7') of the light guide (2; 2') and exhibiting an internal profile (11) which is delimited at one end by the reflective surface (12),
**characterised in that** the cap (10; 10') is push-fitted axially onto the light guide (2; 2').

2. Reading lamp according to claim 1, **characterised in that** the reflective surface (12) is constituted by a mirrored surface of the cap (10, 10').

3. Reading lamp according to claim 1, **characterised in that** the reflective surface (12) is constituted by a mirror arranged on an internal surface of the cap (10, 10').

4. Reading lamp according to any of claims 1 to 3, **characterised in that** the optical axis (22) of the lens (4, 4') coincides with the optical axis (17, 17') of the light guide (2, 2') reflected on the reflective surface (12).

5. Reading lamp according to any of claims 1 to 4, **characterised in that** the lens (4, 4') is constructed in the form of a Fresnel lens (20, 20').

6. Reading lamp according to any of claims 1 to 5, **characterised in that** the free end (7, 7') of the light guide (2, 2') incorporates a stop sleeve (8, 8') via which the cap (10, 10') is push-fitted and fastened.

7. Reading lamp according to any of claims 1 to 6, **characterised in that** the free end (7) of the light guide (2) is constituted by a fibre bundle (5) of the light guide (2).

8. Reading lamp according to any of claims 1 to 6, **characterised in that** the free end (7') of the light guide (2') incorporates a solid light guiding element (25).

9. Reading lamp according to claim 8, **characterised in that** the light guiding element (25) is constructed in the form of a cross-sectional transformer whose first end, which faces towards the fibre bundle (5') of the light guide (2'), is adapted in cross-section to the fibre bundle (5') and whose second end, which faces away from the first end, incorporates a cross-section adapted to the shape of the surface to be illuminated.

10. Reading lamp according to claim 9, **characterised in that** the second end of the cross-sectional transformer is rectangular in shape.

## Revendications

1. Lampe de lecture, en particulier destinée à être montée dans le ciel d'un véhicule, comportant un guide de lumière (2 ; 2'), un élément de déviation (3) réalisé sous forme de capuchon (10 ; 10'), une surface de réflexion (12) et une lentille (4, 4') montée en arrière, qui est agencée dans une ouverture latérale du capuchon (10, 10'), le capuchon (10 ; 10') étant enfiché avec son extrémité opposée à la surface de réflexion (12) sur une extrémité libre (7 ; 7') du guide de lumière (2, 2') et présentant un profil intérieur (11) qui est limité à une extrémité par la surface de réflexion (12), **caractérisée en ce que** le capuchon (10 ; 10') est enfiché axialement sur le guide de lumière (2 ; 2').

2. Lampe de lecture selon la revendication 1, **caractérisée en ce que** la surface de réflexion (12) est formée par une surface spéculaire du capuchon (10, 10').

3. Lampe de lecture selon la revendication 1, **caractérisée en ce que** la surface de réflexion (12) est formée par un miroir agencé sur la face intérieure du capuchon (10 ; 10').

4. Lampe de lecture selon l'une des revendications 1 à 3, **caractérisée en ce que** l'axe optique (22) de la lentille (4, 4') coïncide avec l'axe optique (17, 17') du guide de lumière (2, 2'), réfléchi sur la surface de réflexion (12).

5. Lampe de lecture selon l'une des revendications 1 à 4, **caractérisée en ce que** la lentille (4, 4') est réalisée sous forme de lentille de Fresnel (20, 20').

6. Lampe de lecture selon l'une des revendications 1 à 5, **caractérisée en ce que** l'extrémité libre (7, 7') du guide de lumière (2, 2') présente une douille de butée (8, 8') sur laquelle le capuchon (10, 10') est enfiché et fixé.

7. Lampe de lecture selon l'une des revendications 1 à 6, **caractérisée en ce que** l'extrémité libre (7) du guide de lumière (2) est formé par un faisceau de fibres (5) du guide de lumière (2).

8. Lampe de lecture selon l'une des revendications 1 à 6, **caractérisée en ce que** l'extrémité libre (7') du guide de lumière (2') présente un élément de guidage de lumière (25) massif.

9. Lampe de lecture selon la revendication 8, **caractérisée en ce que** l'élément de guidage de lumière (25) est réalisé sous forme de transformateur de section transversale dont la première extrémité tournée vers le faisceau de fibres (5') du guide de lumière (2') a une section transversale adaptée au faisceau de fibres (5') et dont la deuxième extrémité détournée de la première extrémité présente une section transversale adaptée à la forme de la surface à éclairer.

10. Lampe de lecture selon la revendication 9, **caractérisée en ce que** la deuxième extrémité du transformateur de section transversale présente une forme rectangulaire.
